# EUROPEAN PATENT APPLICATION

(11) **EP 4 756 216 A1**
(43) Date of publication of application: **10.06.2026**
(21) Application number: 24217778.0
(22) Date of filing: 05.12.2024
(51) Int. Cl.: F03D 7/04

(54) **FATIGUE DEPENDENT PULSED CONTROL OF WIND TURBINES IN A WIND FARM**

(71) Applicant: Siemens Gamesa Renewable Energy A/S, 7330 Brande (DK)
(72) Inventor: The designation of the inventor has not yet been filed
(74) Representative: SGRE-Association

(57) **Abstract**

The invention relates to a method of controlling a wind farm comprising a plural of wind turbines (3) each formed with blades (6), wherein the method includes calculating a control of at least one wind turbine (3) inducing a pulsed offset from a base setting including a wake offset input and a at least one further factor related input, e.g. based on a fatigue related factor and / or a power quality related factor.

The invention further relates to a Wind turbine operated according to the method.

The invention further relates to a controller adapted to operate the method.

## Description

### FIELD OF THE INVENTION

The invention relates to a wind farm, more specifically to a pulsed control of the wind turbines of the wind farm.

### BACKGROUND OF THE INVENTION

The annual energy production (AEP) output of a group of wind turbines installed together in a wind farm is observed to be lower than that of an equivalent number of individual turbines. This mainly is due to the occurrence of wake losses within the wind farm. To address this problem, the concept of pulse control has been developed.

Pulse Control is the implementation of a(n open-loop) periodic collective pitch action (or generator torque action etc.) with the aim of enhancing wake loss recovery downstream of a turbine. A typical manifestation of this control algorithm is a sinusoidal collective pitch action with a frequency defined by the non-dimensional Strouhal number, which is typically in the range of 0.25-0.5.

This control action is implemented on the upstream turbine row(s) to reduce wake losses within the wind farm.

There are several problems with present pulse control, particularly as disclosed in literature:
- pulse, such as sinusoidal, collective pitch or generator torque action can cause deterioration of wind farm level power quality, and
- pulse, such as sinusoidal, collective pitch or generator torque action can cause high turbine fatigue loads.
- pulse, such as sinusoidal, collective pitch or generator torque action can cause decrease power quality, e.g. in relation to harmonics.

It is therefore a goal of the present invention to provide a solution to overcome the above-mentioned disadvantages.

### SUMMARY OF THE INVENTION

The object of the invention is achieved by the independent claims. The dependent claims describe advantageous developments and modifications of the invention.

The solution includes introducing a method of controlling a wind farm comprising a plural of wind turbines each formed with blades, wherein the method includes calculating a control of at least one wind turbine inducing a pulsed offset from a base setting including a wake offset input and a and at least one further factor input.

The at least one further factor may include a fatigue factor. This for example could be the remaining useful life (RUL) of one or more components, or at least include this feature. In wind turbines 3 it is routine to monitor several components for fatigue, or rather, often to estimate the remaining useful life, being the expected time left for the component to be sufficiently operational.

The at least one further factor may alternatively, or additionally, include a power quality control factor. This could relate to a registered unexpected change in a power output, e.g. when the actual power output differs more than what is expected, e.g. when the difference value passes a threshold value. This could indicate e.g. unexpected wear or damage to components of a wind turbine, change in the locations, e.g. topography etc.

Within grid engineering the electric power quality relates to how well the voltage, frequency, and waveform of a power supply system conform to defined specifications. It is desired a steady supply voltage that stays within a defined range, a steady AC frequency close to the rated value, and smooth voltage curve waveform. This can then be defined as a good power quality.

Relevant for the power quality is also to restrict harmonic influences on the system, being harmonic content in the waveforms for the generated power. In one embodiment the at least one further factor at least includes a power quality control based on harmonic control, especially harmonic reduction control, this thus would include monitoring the harmonics e.g. of a power output.

In one embodiment the power quality thus is related to the control of harmonics control.

The power quality control factor could relate to an individual wind turbine, the at least one further factor being specific for the respective turbine, this correcting for very localized changes. The power quality control factor can also be related to the combined power output of the wind farm or a sub-group thereof, thus making the control able to adapt to the combined power generation, whereas the 'single-turbine'-version potentially could give negative effects on other wind turbine power generations.

The one further factor may include a fatigue factor, and the fatigue factor may only be included in the pulse offset when a fatigue factor of a monitored component passes a threshold.

The at least one further factor may include a power quality control factor, and the power quality control factor may only be included in the pulse offset when a power quality control factor of a monitored component passes a threshold.

In one embodiment the at least one further factor includes both the fatigue factor and the power quality control factor. In this embodiment either is individually included in the further factor when they pass their respective thresholds or may be only included when both passes their respective thresholds.

The reduction the pulse may be a decrease in frequency, amplitude and/or a shift in the phase.

The pulsed offset may include a basic pulsing offset based on an optimization factor and a correction offset based with at least one further factor as a component.

The calculation may include a stop for the wind turbine once a component of the at least one further factor passes a stop-threshold.

The calculation may be based on the component at least one further factor being the most critical.

In one embodiment where the further factor includes a fatigue factor, this is to be understood related to the fatigue factor of a component of a wind turbine (e.g. seen over all the wind turbines in the wind farm) being most critical, e.g. having the shortest remaining lifetime, has the highest effect if breaking down, calculations based thereon, etc. This for example could mean there will be a longer time for a next service and/or replacement, which would involve full shout-down of a turbine.

In another embodiment where the further factor includes a power quality control factor, the component could relate to the individual wind turbine power output, e.g. the wind turbine most affected by a power reduction.

The pulse offset may relate to a base pitch control setting.

The pulse offset may relate to a generator torque control setting.

The wind may be included in the calculations.

In an embodiment a group comprising plural of the wind turbines in the wind farm are operated according to the method. The plural of wind turbines of the wind farm operated according to the method may be selected according to the presently predominant wind direction.

Each wind turbine being operated according to the method may be operated at its own pulsed control.

The present invention further relates to a wind turbine being operated according to the method of any of the embodiments.

The present invention further relates to a controller adapted to operate the method according to any of the embodiments.

### BRIEF DESCRIPTION OF THE DRAWINGS

Embodiments of the invention are now described, by way of example only, with reference to the accompanying drawings, of which:
Figure 1 shows a schematic and typical electrical supply and distribution system supplied by power produced by a plural of wind turbines in a wind farm.
Figure 2 shows an upstream wind turbine waking a downstream wind turbine.
Figure 3 shows an algorithm according to the present invention including a component fatigue related correction to a pulsed offset.
Figures 4A-C shows three different fatigue related correction to a pulsed offset.

The illustration in the drawings is in schematic form. It is noted that in different figures, similar or identical elements may be provided with the same reference signs.

### DESCRIPTION OF THE DRAWINGS

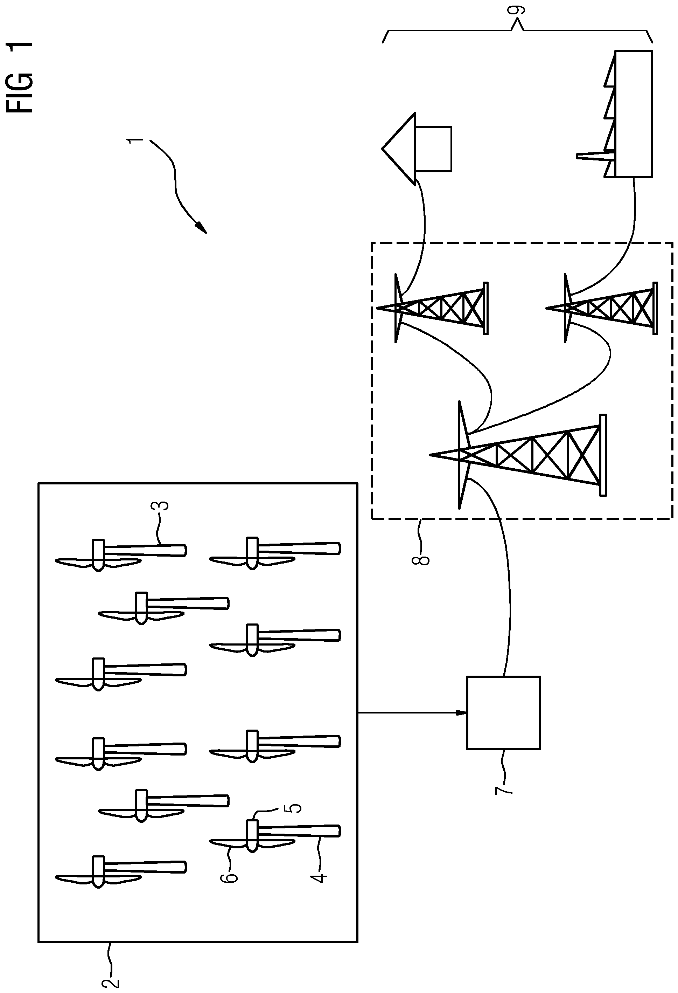

Figure 1 illustrates a schematic and typical electrical supply and distribution system 1 supplied by power produced by a renewable power source 2. This could be in the form of a collection of wind turbines 3, also referred to as a wind farm, or wind park.

The individual wind turbines 3 each are formed with a tower 4 and a nacelle 5. To catch the wind the nacelle 5 comprises a hub and rotor with blades 6 to catch the wind and a generator to convert a rotation into electrical power.

The generated power is feed to distributions systems 7 including substations, transformers etc. From the distribution systems 7 it is feed to the electrical distribution grid 8, or utility grid, to be provided as power for end users 9.

A wind turbine 3 usually is operated with settings to maximize power production, or generation, such as operating as close to the Betz-optimal coefficient as possible.

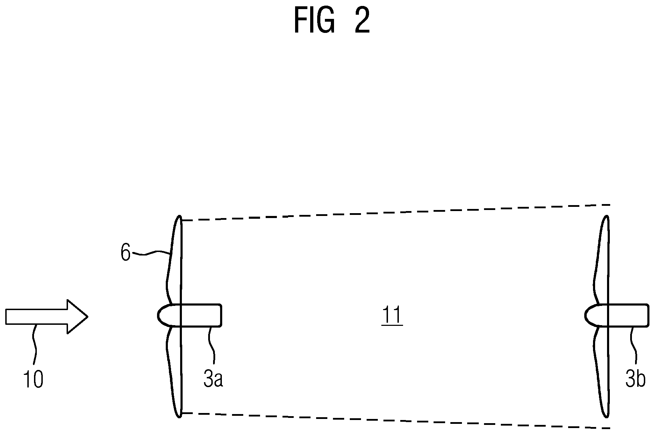

In a wind farm where with a collection of relatively closely positioned wind turbines 3, these settings may not be the optimal seen in relation optimizing the total wind farm Annual Energy Production (AEP). As illustrated in figure 2, in dependence of a present wind 10 direction, an upstream wind turbine 3a (seen relative to the direction of the wind 10) may fully or partly wake a downstream wind turbine 3b.

The upstream wind turbine 3a thus generates a downstream wake region 11.

Due to wake it is well known the waked downstream wind turbine 3b may produce less power than what is expected according to its present settings.

It has been found the total combined power generation may be increased by changing the settings of the upstream wind turbine 3a to reduce its power generation. This is due to the one (or more) waked downstream wind turbine(s) 3b experiencing a higher power generation increase than the loss of the upstream wind turbine 3a. For whole wind farm this may lead to an improvement of the Annual Energy Production (AEP).

It has further been found to introduce pulsed control of the wind turbine 3a to offset from operating as close to the Betz-optimal coefficient as possible, may lead to an even further improved gain in overall wind farm power production. The pulse could be a periodic offset, such as in the following exemplified by being sinusoidal. It is to be said, this is purely for example, any other periodic or non-periodic pulsation will also apply to the present invention.

The pulse, or pulsed offset, thus at least may be based at least partly on a pulsed wake offset component in its calculation, this being an offset component based on countering wake effects.

By offset is referred to operating the wind turbine 3 at settings differing from some base settings. The base are the general un-wake related settings, and may e.g. be those that would be adapted for single isolated wind turbines 3, to the nominal settings etc.

The base settings then are the settings of e.g. yaw, pitch and generator torque to optimize an optimization factor for the (isolated single) wind turbine 3. This may be any quantity to be optimized, particularly the power production. The offset then is a change of either one or more of these from the base setting.

The means to control a wind turbine 3 mainly includes the yaw of the rotor blades (the rotation of e.g. the whole of the nacelle 5 and rotor blades 6), the pitch angle of the blades 6 around a line extending in their longitudinal direction, or a generator torque. The most common control in relation to pulsed offset is to adjust pitch angle of the blades, but it may also either be the generator torque, or both. The yaw may also be used at for more slow pulses, possible combined with pitch control and/or generator torque control.

There are two problems with present pulse control, particularly as disclosed in literature:
- pulse, such as sinusoidal, collective pitch or generator torque action can cause deterioration of wind farm level power quality, and
- pulse, such as sinusoidal, collective pitch or generator torque action can cause high turbine fatigue loads.

The present invention introduces a solution, particular to the second problem of high fatigue loads.

This includes operating at least one wind turbine 3 in a wind farm (such as a waking upstream wind turbine 3a) by a pulsed offset. The time dependent setting offset pulse according to the solution may be formed a of pulsed wake offset and at least one wind turbine 3 component at least one further factor.

This at least one further factor may include a fatigue factor.

In wind turbines 3 it is routine to monitor several components for fatigue, or rather, often to estimate the remaining useful life (RUL).

Among a plural selected components for fatigue, the method, or algorithm, according to the present invention may include only what is selected as critical components. This could for example be due to the functionality of the respective components and/or their remaining useful life (RUL).

The at least one further factor may include a power quality control factor. This may relate to a measure of an offset of measured, or registered, actual power generation outputted by the full wind farm (or sub-group thereof) relative to an expected, estimated, or calculated combined power output.

It may also relate to the measure of an offset of measured, or registered, actual power generation outputted by a wind turbine relative to an expected, estimated, or calculated power output.

In one embodiment, the respective components are being taken into consideration in the algorithm of the method only after passing a given fatigue threshold. Then, only after passing a further fatigue threshold will it be included in the calculations of the pulsed wake offset as critical components. In one embodiment, calculations are only based on the one or more component further factor, e.g. fatigue factor(s), being the most critical out of a plural of critical components.

The time dependent setting offset (the pulse or the pulse offset) is then actual offset to the base settings of the wind turbine 3 under which it is operated.

The pulse offset then is formed by at least a wake related component, or input, and a at least one further factor related component, or input.

The pulse offset may be formed in several manners. In one example it is formed by an addition of the at least one further factor related input to the pulsed wake offset component. In other example there is a non-linear relation between the pulsed wake offset component and the at least one further factor related input. In a further example the pulse offset is formed by an iterative optimization algorithm including the pulsed wake offset input and the at least one further factor related input.

Reducing the pulsed wake offset by the at least one further factor (e.g. being, or including a fatigue factor component) related input may lead higher wake related losses in power generation. Therefore, in one embodiment, only when a at least one further factor of a monitored component passes a threshold is the at least one further factor related input included into the pulsed offset.

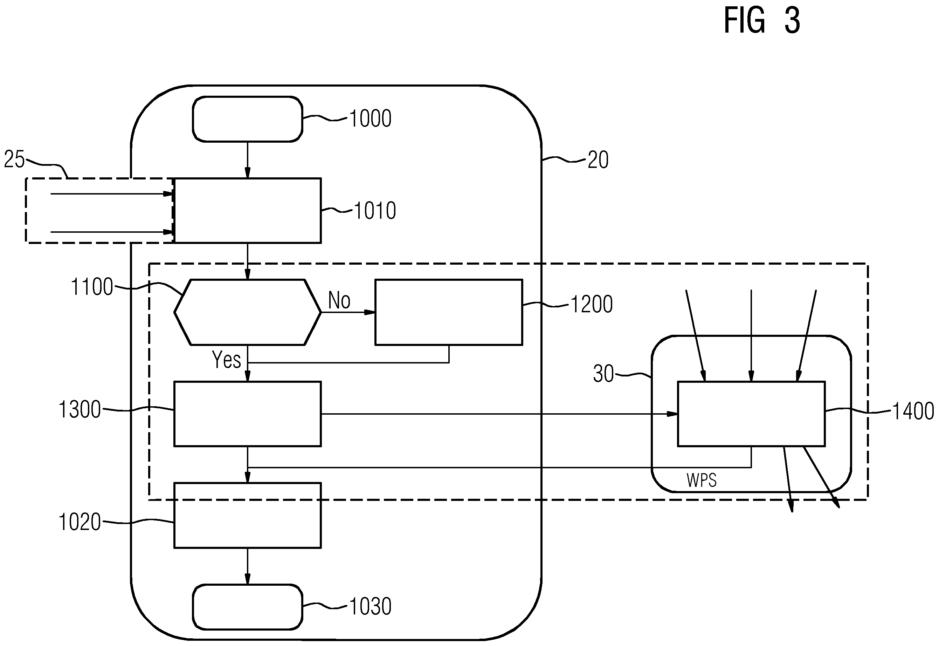

This is also illustrated the flow chart of fig. 3 of an algorithm running in a controller, e.g. the turbine controller. It with a step of starting the algorithm 1000.

In a next step 1010, based in input parameters such as the wind speed and wind direction, an ideal pulse, or pulsed wake offset, is calculated. This calculation is based on an optimization factor, such as to obtain a maximal total output power generation of the wind farm.

In a step 1020 the pulse control data then is transferred for implementation in the control of at least one wind turbine 3 in the wind farm.

A step 1030 then ends the algorithm.

The present inventions then introduce the further steps of taking the at least one further factor related input into account.

This includes as step 1100 if checking if a at least one further factor of a monitored component passes a threshold, or in other words, checking one or more components if the remaining useful life gets below a given threshold value.

In a step 1200, if the outcome from step 1100 is negative, meaning the threshold has not been passed, there is no need to introduce the at least one further factor related input into the pulse offset. Then, in one embodiment the pulse is given directly for implementation via step 1020. In another embodiment, if a group or all of the wind turbines 3 in the wind farm are operated according to pulse offsets, a step 1400 is introduced between steps 130 and 1020 calculating the pulses of all wind turbines 3 in the group or of the full wind farm 3.

The step 1200 may use any suitable means to adjust the pulses of the individual wind turbines 3, such that together they operate to optimize a factor like generated power. The methods could be any optimization algorithm, machine learning methods etc.

In this embodiment the optimized pulse offsets subsequently are transferred 1020 for implementation in the control of at least one wind turbine 3 in the wind farm.

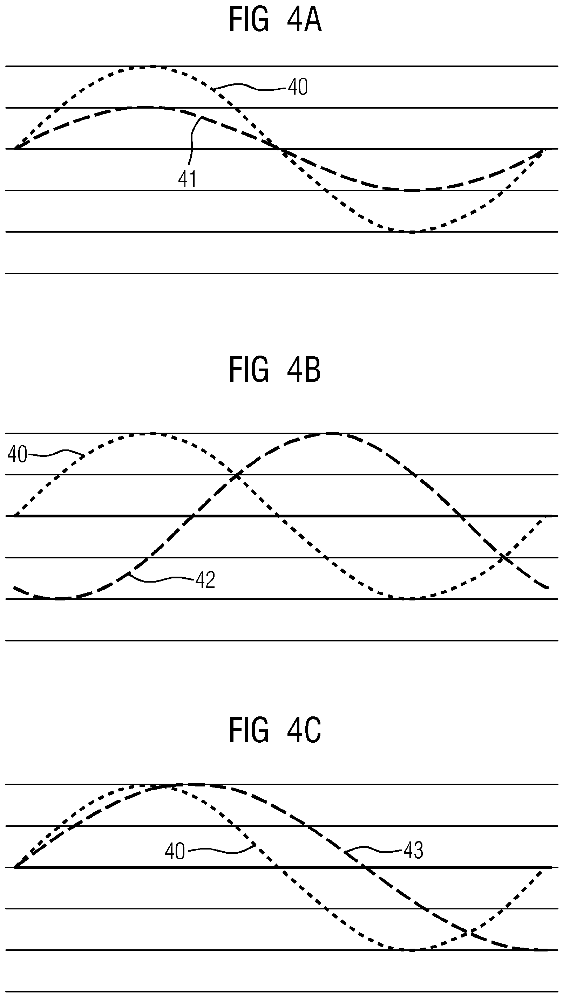

Figures 4A-C illustrate three ways the pulses can be corrected based on the at least one further factor related input.

In figure 4A a pulse including only the pulse wake offset component 40 is seen together with a pulse also including the at least one further factor related input 41. In this embodiment the reaction was a reduction in the amplitude. The advantage is the wind turbine 3 components are subdued to smaller changes, this reducing load of the pulses on the critical components.

Figure 4B differs from figure 4A in that the pulse including the at least one further factor related input 42 instead has been phase-shifted. An advantage is the phase-shifted can be chosen to reduce shear forces on a downstream wind turbine 3b, which again may reduce the loads of the pulses on the critical components.

Figure 4C differs from figure 4A and 4B in that the pulse including the at least one further factor related input 43 instead has been shifted in the frequency. An advantage is the critical components are subdued to fewer changes to reduce the load due to the pulses.

In one embodiment the present invention includes a combination of either the solutions according to figures 4A-C.

In one embodiment the calculation includes a stop for the wind turbine (3) once a component at least one further factor passes a stop-threshold.

There is a dependency of the wind direction to which wind turbines 3 in a wind farm will wake other wind turbines 3 and, and how much they will be waked. Therefore, in one embodiment the group of wind turbines 3 being operated according to the pulse offset of any of the embodiments is based on the presently predominant wind direction.

In one embodiment there are individual pulsed control settings for each wind turbine 3 in a wind farm operated according to any of the embodiments.

The present invention further relates to a wind turbine being operated according to the method of any of the embodiments.

The present invention further relates to a controller adapted to operate the method according to any of the embodiments.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Method of controlling a wind farm comprising plural of wind turbines (3) each formed with blades (6), wherein the method includes calculating a control of at least one wind turbine (3) inducing a pulsed offset from a base setting including a wake offset input and at least one further factor input.

2. Method according to claim 1, wherein the at least one further factor at least includes a fatigue factor, and which fatigue factor is only included in the pulse offset when a fatigue factor of a monitored component passes a threshold.

3. Method according to claim 1 or 2, wherein the at least one further factor at least includes a power quality control factor, and which power quality control factor is only included in the pulse offset when a power quality control factor of a monitored component passes a threshold.

4. Method according to claim 3, wherein the power quality control factor is related to the power output of a wind turbine, the combined power output of the wind farm or a sub-group thereof.

5. Method according to claim 4, wherein the power quality is related to the control of harmonics control.

6. Method according to one of claim 2-5, wherein reduction the pulse is a decrease in frequency, amplitude and/or a shift in the phase.

7. Method according to any of the previous claims, wherein the pulsed offset includes a basic pulsing offset based on an optimization factor and a correction offset based with at least one further factor as a component.

8. Method according to any of the previous claims, wherein the calculation is based on the component at least one further factor being the most critical.

9. Method according to any of the previous claims, wherein the pulse offset relates to a base pitch control setting and/or a generator torque control setting.

10. Method according to any of the previous claims, wherein the wind (10) is included in the calculations.

11. Method according to any of the previous claims, wherein a group comprising a plural of the wind turbines (3) in the wind farm are operated according to the method.

12. Method according to any of the previous claims, where the plural of wind turbines (3) of the wind farm operated according to the method is selected according to the presently predominant wind direction.

13. Method according to claim 11 or 12, where each wind turbine (3) operated according to the method is operated at its own pulsed control.

14. Wind turbine (3) operated according to the method of any of the previous claims.

15. Controller adapted to operate the method according to any of the previous claims.
